# FASCICULE DE BREVET EUROPEEN

(11) **EP 1 322 924 B1**
(45) Date de publication et mention de la délivrance du brevet: **08.06.2005**
(21) Numéro de dépôt: 01972194.3
(22) Date de dépôt: 25.09.2001
(51) Int. Cl.: G01G 19/07

(54) **DISPOSITIF DE PESEE D'UN OBJET PAR SOULEVEMENT**
ANHEBEWÄGEVORRICHTUNG FÜR EIN OBJEKT
DEVICE FOR WEIGHING AN OBJECT BY LIFTING

(30) Priorité: 27.09.2000 FR 0012282
(43) Date de publication de la demande: 02.07.2003
(73) Titulaire: AIRBUS FRANCE, 31060 Toulouse (FR)
(72) Inventeur: FALCOU, Gérard, F-83210 Solies Toucas (FR); GODER, Thierry, F-83160 La Valette du Var (FR); BOYER, François, F-31100 Toulouse (FR)
(74) Mandataire: Bonnetat, Christian
(86) Numéro de dépôt international: PCT/FR2001/002960
(87) Numéro de publication internationale: WO 2002/027282

(56) Documents cités:
- US-A- 2 754 107
- US-A- 2 806 686
- US-A- 4 385 527
- US-A- 6 002 090

## Description

La présente invention concerne,un dispositif pour la pesée d'un objet par soulèvement de celui-ci. Un tel dispositif est connu du document US-A-6 002 090, lequel décrit un tablier peseur, monté sur un chariot mobile, comprenant un premier capteur pour la mesure de la masse de l'objet soulevé, un deuxième capteur pour la mesure des forces parasites, et des moyens de correction de la mesure de la masse en fonction de la mesure des forces parasites.

L'invention s'applique à la pesée de toutes sorte d'objets, notamment lourds et volumineux. Elle s'applique à la pesée de toutes sortes d'objets, notamment lourds et volumineux. Cependant, elle sera expliquée ci-après dans le cadre plus particulier de la pesée des aéronefs.

On sait que, pour peser un aéronef, on peut disposer sous ses trains de roues, des dispositifs de pesée pourvus chacun d'un capteur électronique de compression, par exemple disposé à l'extrémité d'un vérin ou d'un appareil de levage analogue, et on soulève ledit avion par action desdits vérins, lesdits capteurs étant pressés entre le vérin et le train de roues correspondants. Par suite, la mesure d'effort de compression, délivrée par un capteur, est représentative de la masse de la partie d'aéronef soulevée par le vérin correspondant. Les documents US-A-4 385 527, US-A-2 754 107 et US-A-2 806 686 servent à refléter l'état de la technique antérieure.

Cependant, une telle pesée ne peut être significative de la masse réelle de l'aéronef que si aucune force parasite transversale, par exemple due à la déformation de l'aéronef pendant l'opération de levage, n'apparaît pendant la pesée. Aussi, pour être sûr d'obtenir une mesure suffisamment précise de la masse d'un aéronef, on est obligé de transporter celui-ci sur un site spécial de pesée équipé d'un système de pesée à poste fixe.

Bien entendu, de tels sites sont coûteux et la pesée d'un aéronef est longue, du fait qu'il faut amener ledit aéronef sur le site spécial de pesée, puis l'en sortir.

La présente invention a pour objet de remédier à cet inconvénient. Elle concerne un dispositif permettant de peser un aéronef là où il est, sans avoir à le déplacer.

A cette fin, selon l'invention, le dispositif de pesée d'un objet par soulèvement comportant :
- un socle ;
- un coulisseau monté verticalement mobile sur ledit socle ;
- des moyens moteurs pour déplacer ledit coulisseau par rapport audit socle ;
- un capteur électronique, solidaire dudit coulisseau en déplacement vertical et disposé sur ledit coulisseau de façon à être interposé entre ce dernier et ledit objet lorsque lesdits moyens moteurs actionnent ledit coulisseau pour soulever ledit objet, ledit capteur délivrant un premier signal de mesure, représentatif de l'effort de compression auquel il est soumis ; et
- des moyens de lecture dudit premier signal de mesure, est remarquable :
   - en ce que ledit capteur électronique est apte, de façon connue en soi, à délivrer de plus un second signal de mesure, représentatif de l'effort de cisaillement, transversal audit objet, auquel il est soumis ; et
   - en ce que ledit dispositif comporte des moyens de comparaison pour comparer ledit second signal de mesure avec une valeur de seuil, afin de valider, ou invalider, ledit premier signal de mesure.

On voit ainsi que, grâce à la présente invention, ledit premier signal de mesure (c'est-à-dire la mesure de la masse de l'aéronef dans l'exemple ci-dessus) n'est validé que si ledit second signal de mesure (c'est-à-dire la force parasite transversale) est inférieur audit seuil.

Bien entendu, la valeur dudit seuil est choisie pour que, lorsqu'il valide ledit premier signal, la valeur de celui-ci correspond à la masse dudit objet avec une précision suffisante, et pour que, lorsqu'il ne valide pas ledit premier signal, la valeur dudit premier signal n'est pas représentative avec une précision suffisante de ladite masse.

Ladite valeur de seuil peut être prédéterminée et correspondre à une valeur dudit second signal de mesure au-delà de laquelle ledit premier signal de mesure n'est plus représentatif de la masse réelle dudit objet.

En variante, ladite valeur de seuil peut correspondre à une fraction prédéterminée dudit premier signal de mesure au-delà de laquelle celui-ci n'est plus représentatif de la masse réelle dudit objet.

Par ailleurs, pour permettre un autocentrage spontané dudit capteur sous ledit objet et limiter les efforts de cisaillement transversal parasites, ledit capteur est monté sur ledit coulisseau de façon à pouvoir, dans certaines limites, coulisser librement dans une direction horizontale, transversale audit objet.

De préférence, de façon à pouvoir être aisément déplacé et mis en place sous ledit objet, le dispositif de pesée conforme à la présente invention est monté sur un chariot mobile. Un tel chariot mobile peut être déplaçable la manière des crics de garage, utilisés pour soulever les automobiles. En variante, il peut être motorisé.

Les figures du dessin annexé feront bien comprendre comment l'invention peut être réalisée. Sur ces figures, des références identiques désignent des éléments semblables.
La figure 1 montre, en perspective du dessus et de l'avant, un exemple de réalisation pratique du dispositif de pesée conforme à la présente invention.
La figure 2 est une vue de dessus partielle de ce dispositif de pesée, selon la flèche II de la figure 1.
La figure 3 est le schéma synoptique du circuit électrique de mesure du dispositif conforme à la présente invention.

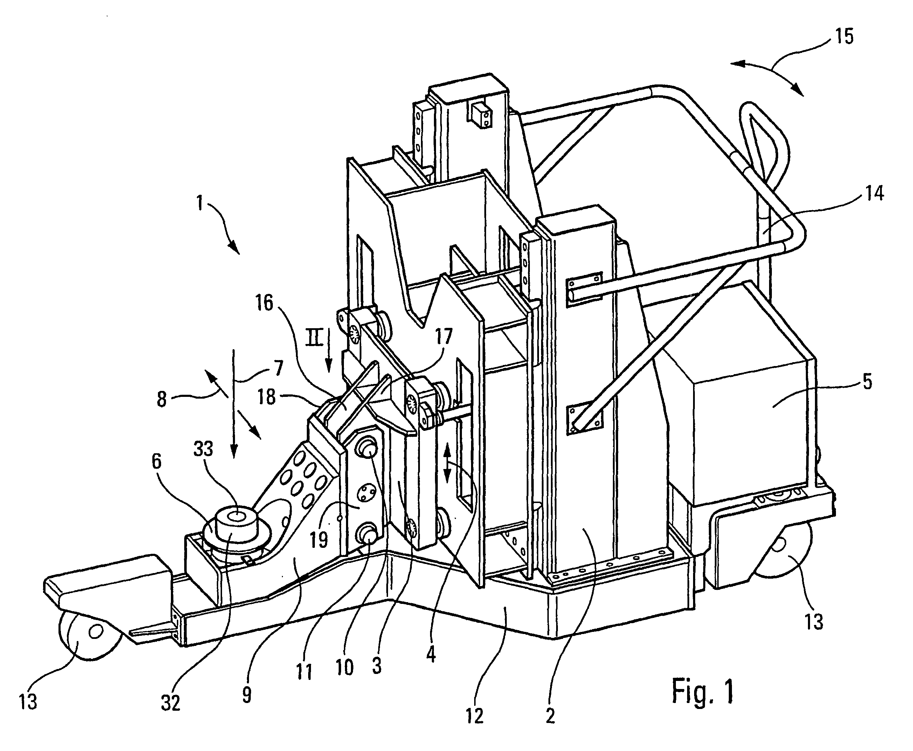

Le dispositif de pesée par soulèvement 1, représenté en perspective sur la figure 1, comporte un socle 2, un coulisseau 3 monté verticalement mobile sur le socle 2, comme cela est symbolisé par la double flèche 4, et un moteur électrique ou hydraulique 5 permettant de déplacer le coulisseau 3 par rapport au socle 2. Le dispositif 1 comporte de plus un capteur électronique 6, apte à délivrer, d'une part, un signal de mesure de compression, lorsqu'il est soumis à un effort de compression (symbolisé par la flèche 7), et, d'autre part, un signal de mesure de cisaillement transversal (symbolisé par la flèche 8). Le capteur électronique 6 est porté par un support 9, relié audit coulisseau 3 par deux axes horizontaux 10 et 11, parallèles audit effort de cisaillement transversal 8.

L'ensemble des éléments 2, 3, 5, 6, 9, 10 et 11 est porté par un chariot 12, pourvu de roues 13 et d'un levier basculant 14 (flèche 15), permettant, de façon usuelle, le guidage dudit chariot 12 en déplacement et le blocage en rotation des roues 13, à l'arrêt.

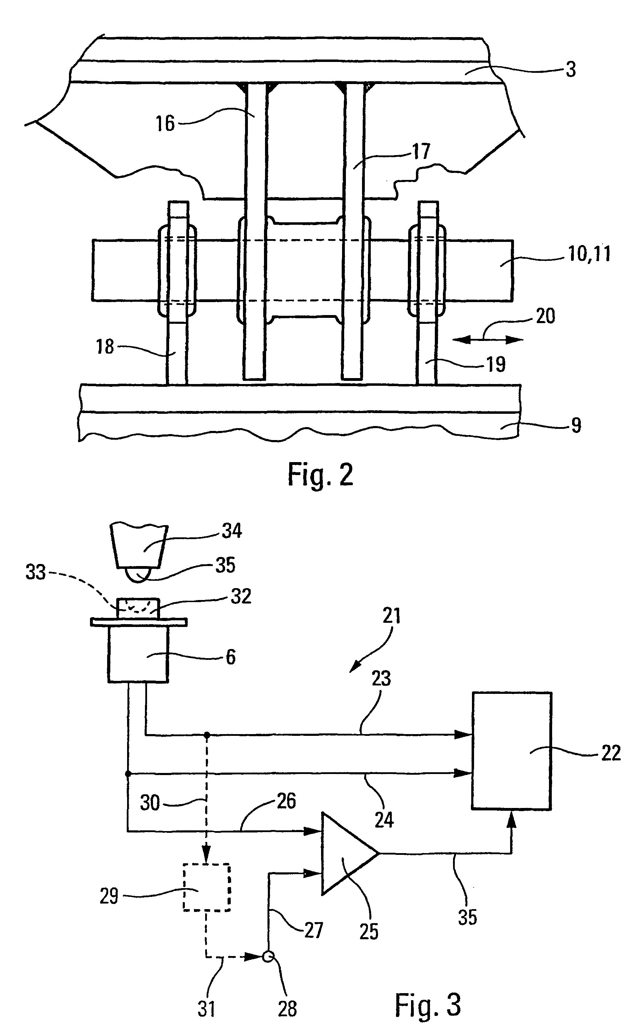

Comme on peut le voir plus en détail sur la vue en plan partielle de la figure 2, le coulisseau 3 comporte deux parois verticales parallèles 16 et 17, saillant en direction du support 9. De même, ce dernier comporte deux parois verticales 18 et 19, parallèles entre elles ainsi qu'aux parois 16 et 17, saillant en direction du coulisseau 3. Dans le mode de réalisation représenté sur la figure 2, les parois 18 et 19 sont disposées de part et d'autre des parois 16 et 17.

Chacun des deux axes 10 et 11 traverse les quatre parois 16 à 19 et le montage desdits axes par rapport à ces dernières est tel que le support 3 peut librement coulisser parallèlement auxdits axes 10 et 11, par rapport au coulisseau 3, comme cela est symbolisé sur la figure 2 par la double flèche 20. Bien entendu, la course de ce coulissement est limitée par la coopération des parois 16 et 18, d'un côté, et par la coopération des parois 17 et 19, de l'autre côté.

Comme cela est montré sur la figure 3, le dispositif de pesée 1 comporte un circuit de mesure 21, non visible sur la figure 1. Ce circuit de mesure 21 comporte un dispositif de lecture et d'affichage 22, recevant, par une liaison 23, le signal de mesure de compression engendré par le capteur électronique 6. Eventuellement, par une liaison 24, le signal de mesure de cisaillement, également engendré par le capteur électronique 6, peut aussi être adressé au dispositif de lecture et d'affichage 22.

Le circuit de mesure 21 comporte de plus un comparateur 25, recevant sur l'une de ses deux entrées, par une liaison 26, ledit signal de mesure de cisaillement engendré par le capteur électronique 6 et, sur son autre entrée, par une liaison 27, une valeur de seuil disponible sur une borne 28.

Cette valeur de seuil peut être prédéterminée et appliquée sur la borne 28, par un générateur (non représenté). En variante, cette valeur de seuil peut être engendrée par un diviseur 29 recevant, par une liaison 30, le signal de mesure de compression et adressant à ladite borne 28, par une liaison 31, une fraction dudit signal.

Par ailleurs, le capteur électronique 6 porte, sur sa face sensible supérieure, un plot de centrage 32 pourvu d'un évidement de centrage 33.

Le fonctionnement du dispositif de pesée conforme à la présente invention est le suivant.

Un opérateur amène le chariot 12 sous l'objet à peser (par exemple un avion non représenté) de façon que ledit plot de centrage 32 se trouve au moins approximativement en regard d'un plot de centrage 34, prévu spécialement à cet effet sous ledit objet et pourvu d'une saillie de centrage 35, complémentaire de l'évidement de centrage 33 dudit plot de centrage 32.

Ensuite, l'opérateur actionne le moteur 5 et le coulisseau 3 s'élève, en rapprochant le capteur 6 de l'objet à peser. L'élévation du coulisseau 3 continuant, l'évidement 33 du plot de centrage 32 coopère avec la saillie 35 du plot de centrage 34 pour parfaire le centrage transversal du capteur 6 par rapport à l'objet à peser, du fait que ledit capteur 6 est mobile de façon limité (flèche 20) grâce aux axes de coulissement 10 et 11.

L'élévation du coulisseau 3 est arrêtée lorsque, par coopération des plots 32 et 34, l'objet à peser est soulevé par ledit coulisseau 3.

Le signal de mesure de compression (la pesée), et éventuellement le signal de mesure de cisaillement (l'effort transversal), sont adressés au dispositif de lecture et d'affichage 22, respectivement par les liaisons 23 et 24.

De plus, par une liaison 35, le comparateur 25 adresse au dispositif de lecture et d'affichage 22, le résultat de la comparaison entre ledit signal de mesure de cisaillement et la valeur du seuil présente sur la borne 28.

Par suite, si les efforts transversaux 8 sont suffisamment faibles pour ne pas nuire à la précision de la pesée --ce qui est représenté par ladite valeur de seuil-- ladite pesée est affichée sur le dispositif 22.

En revanche, si les efforts transversaux 8 sont trop élevés et nuisent à la précision de la pesée, le signal de comparaison véhiculé par la liaison 35 inhibe l'affichage de ladite pesée ou indique que celle-ci n'est pas fiable.

Bien entendu, pour peser un objet aussi lourd et volumineux qu'un avion, on peut utiliser plusieurs dispositifs de pesée 1, de préférence chacun disposé sous un train de roues et synchronisé en fonctionnement avec les autres.

Bien que ci-dessus on ait décrit un mode de réalisation comportant un chariot 12 déplaçable à la manière d'un cric de garage, utilisé pour soulever les automobiles, il va de soi que ledit chariot mobile pourrait être motorisé à l'aide de tout moyen de motorisation connu, par exemple un moteur électrique alimenté par batterie.

## Revendications

1. Dispositif de pesée d'un objet par soulèvement comportant :
- un socle (2) ;
- un coulisseau (3) monté verticalement mobile sur ledit socle (2) ;
- des moyens moteurs (5) pour déplacer ledit coulisseau (3) par rapport audit socle (2) ;
- un capteur électronique (6), solidaire dudit coulisseau (3) en déplacement vertical et disposé sur ledit coulisseau (3) de façon à être interposé entre ce dernier et ledit objet lorsque lesdits moyens moteurs (5) actionnent ledit coulisseau pour soulever ledit objet, ledit capteur (6) délivrant un premier signal de mesure, représentatif de l'effort de compression auquel il est soumis ; et
- des moyens de lecture (22) dudit premier signal de mesure,
**caractérisé :**
- **en ce que** ledit capteur électronique (6) est apte, de façon connue en soi, à délivrer de plus un second signal de mesure, représentatif de l'effort de cisaillement, transversal audit objet, auquel il est soumis ; et
- **en ce que** ledit dispositif comporte des moyens de comparaison (25) pour comparer ledit second signal de mesure avec une valeur de seuil, afin de valider, ou invalider, ledit premier signal de mesure.

2. Dispositif de pesée selon la revendication 1,
**caractérisé en ce que** ladite valeur de seuil est prédéterminée et correspond à une valeur dudit second signal de mesure au-delà de laquelle ledit premier signal de mesure n'est plus représentatif de la masse réelle dudit objet.

3. Dispositif de pesée selon la revendication 1,
**caractérisé en ce que** ladite valeur de seuil est une fraction prédéterminée dudit premier signal de mesure au-delà de laquelle celui-ci n'est plus représentatif de la masse réelle dudit objet.

4. Dispositif de pesée selon l'une quelconque des revendications 1 à 3,
**caractérisé en ce que** ledit capteur (6) est monté sur ledit coulisseau (3) de façon à pouvoir, dans certaines limites, coulisser librement dans une direction horizontale, transversale audit dispositif.

5. Dispositif de pesée selon l'une quelconque des revendications 1 à 4,
**caractérisé en ce qu'**il est monté sur un chariot mobile (12).

6. Dispositif de pesée selon la revendication 5,
**caractérisé en ce que** ledit chariot mobile (12) est motorisé.

## Patentansprüche

1. Vorrichtung zum Wägen eines Objektes durch dessen Anheben, aufweisend:
- einen Sockel (2);
- einen Schieber (3), der vertikal beweglich auf dem Sockel (2) montiert ist;
- Motoren (5) zum Verfahren des Schiebers (3) in Bezug zum Sockel (2);
- einen elektronischen Sensor (6), der einstückig mit dem vertikal verfahrbaren Schieber (3) ausgebildet ist und so auf dem Schieber (3) angeordnet ist, dass er sich zwischen diesem und dem Objekt befindet, wenn die Motoren (5) den Schieber in Bewegung setzen, um das Objekt anzuheben, wobei der Sensor (6) ein erstes Messsignal liefert, das die Druckbeanspruchung darstellt, der er unterliegt; und
- Mittel zum Lesen (22) des ersten Messsignals,
wobei:
- der elektronische Sensor (6) dazu fähig ist, auf an sich bekannte Weise außerdem ein zweites Messsignal zu liefern, das die transversal zum Objekt wirkende Schubbeanspruchung darstellt, der er unterliegt; und
- die Vorrichtung Vergleichsmittel (25) aufweist zum Vergleichen des zweiten Messsignals mit einem Schwellenwert, um das erste Messsignal zu validieren oder abzulehnen.

2. Wägevorrichtung nach Anspruch 1,
wobei der Schwellenwert im Voraus bestimmt wird und einem Wert des zweiten Messsignals entspricht, über dem das erste Messsignal nicht mehr das tatsächliche Gewicht des Objektes darstellt.

3. Wägevorrichtung nach Anspruch 1,
wobei der Schwellenwert ein im Voraus bestimmter Bruch des ersten Messsignals ist, über dem dieses nicht mehr das tatsächliche Gewicht des Objektes darstellt.

4. Wägevorrichtung nach einem der vorhergehenden Ansprüche 1 bis 3,
wobei der Sensor (6) so auf dem Schieber (3) montiert ist, dass er innerhalb bestimmter Grenzen frei in eine horizontale Richtung, transversal zum Objekt gleiten kann.

5. Wägevorrichtung nach einem der vorhergehenden Ansprüche 1 bis 4,
wobei diese auf einem Wagen (12) montiert ist.

6. Wägevorrichtung nach Anspruch 5,
wobei der Wagen (12) motorbetrieben ist.

## Claims

1. A device for weighing an object by lifting, comprising:
- a base (2);
- a slide (3) mounted so that it can move vertically on said base (2);
- drive means (5) for moving said slide (3) with respect to said base (2);
- an electronic sensor (6), secured to said slide (3) in terms of vertical movement and arranged on said slide (3) in such a way as to be inserted between the latter and said object when said drive means (5) operate said slide in order to lift said object, said sensor (6) delivering a first measurement signal representative of the compressive load to which it is subjected; and
- means (22) for reading said first measurement signal,
**characterized:**
- **in that** said electronic sensor (6) is able, in a way known per se, in addition to deliver a second measurement signal representative of the shear load, transverse to said object, to which it is subjected; and
- **in that** said device comprises comparison means (25) for comparing said second measurement signal with a threshold value so as to validate, or invalidate, said first measurement signal.

2. The weighing device as claimed in claim 1,
**characterized in that** said threshold value is predetermined and corresponds to a value of said second measurement signal above which said first measurement signal is no longer representative of the true mass of said object.

3. The weighing device as claimed in claim 1,
**characterized in that** said threshold value is a predetermined fraction of said first measurement signal above which the latter is no longer representative of the true mass of said object.

4. The weighing device as claimed in any one of claims 1 to 3,
**characterized in that** said sensor (6) is mounted on said slide (3) in such a way as to be able, within certain limits, to slide freely in a horizontal direction transverse to said device.

5. The weighing device as claimed in any one of claims 1 to 4,
**characterized in that** it is mounted on a mobile carriage (12).

6. The weighing device as claimed in claim 5,
**characterized in that** said mobile carriage (12) is motorized.
